(19) Europäisches Patentamt
European Patent Office
Office européen des brevets

(11) **EP 0 738 311 B1**

(12) **EUROPÄISCHE PATENTSCHRIFT**

(45) Veröffentlichungstag und Bekanntmachung des Hinweises auf die Patenterteilung:
**21.08.2002   Patentblatt 2002/34**

(21) Anmeldenummer: **94911105.8**

(22) Anmeldetag: **05.04.1994**

(51) Int Cl.⁷: **C09K 11/80**, C09K 11/79, C09K 11/78, C09K 11/08, H01J 61/44

(86) Internationale Anmeldenummer:
**PCT/DE94/00382**

(87) Internationale Veröffentlichungsnummer:
**WO 94/022975 (13.10.1994 Gazette 1994/23)**

(54) **LEUCHTSTOFFE FÜR BELEUCHTUNGSZWECKE**

FLUORESCENT MATERIALS FOR ILLUMINATION PURPOSES

SUBSTANCES FLUORESCENTES UTILISEES A DES FINS D'ECLAIRAGE

(84) Benannte Vertragsstaaten:
**BE CH DE FR GB IT LI NL SE**

(30) Priorität: **05.04.1993  DE 4311197**

(43) Veröffentlichungstag der Anmeldung:
**23.10.1996   Patentblatt 1996/43**

(60) Teilanmeldung:
**00121142.4 / 1 078 972**
**00124154.6 / 1 076 084**

(73) Patentinhaber: **Patent-Treuhand-Gesellschaft für elektrische Glühlampen mbH**
**81543 München (DE)**

(72) Erfinder:
 • **ZACHAU, Martin**
 **D-82269 Geltendorf (DE)**
 • **SCHMIDT, Dieter**
 **D-80798 München (DE)**
 • **MÜLLER, Ulrich**
 **D-81479 München (DE)**

(56) Entgegenhaltungen:
 EP-A- 0 062 993      EP-A- 0 331 738
 EP-A- 0 498 689      US-A- 1 022 399
 US-A- 4 161 457      US-A- 4 423 349

 • DATABASE WPI Section Ch, Derwent Publications Ltd., London, GB; Class L03, AN 84-118637 & JP,B,59 015 951 (MATSUSHITA) 12. April 1984
 • DATABASE WPI Section Ch, Derwent Publications Ltd., London, GB; Class L03, AN 90-204934 & JP,A,2 135 277 (SANYO) 24. Mai 1990
 • DATABASE WPI Section Ch, Derwent Publications Ltd., London, GB; Class L03, AN 77-90821Y & JP,A,52 133 091 (DAI-NIPPON) 8. November 1977

**Beschreibung**

Die Erfindung betrifft eine Leuchtstofflampe mit einer Leuchtstoffbeschichtung auf der Innenwandfläche des Lampenkolbens, wobei innerhalb des Lampenkolbens VUV-Strahlung, insbesondere mit Wellenlängen im Bereich zwischen ca. 145 nm und 185 nm erzeugt wird.

Sie steht in engem Zusammenhang mit der deutschen Patentanmeldung P 43 11 197.1, in der eine neuartige Betriebsweise für dielektrisch behinderte Entladungen offenbart ist. Die dort näher erläuterte Lehre ermöglicht u.a. eine deutlich effizientere Erzeugung von UV- bzw. VUV-Strahlung, insbesondere mittels Excimeren - z.B. $Xe_2^*$, welches eine molekulare Bandenstrahlung im Bereich um 172 nm emittiert -, als dies bisher möglich war. Im folgenden soll mit dem Begriff "VUV-Strahlung" insbesondere elektromagnetische Strahlung mit Wellenlängen im Bereich zwischen ca. 145 nm und 185 nm bezeichnet werden.

Das Hauptanwendungsgebiet heutiger Leuchtstoffe in der Beleuchtungstechnik, d.h. zur Umwandlung kurzwelliger elektromagnetischer Strahlung in Licht, ist die Leuchtstofflampe. Diese basiert auf der Quecksilber-Niederdruckentladung, die Energie überwiegend in Form von UV-Strahlung emittiert. Dabei handelt es sich im wesentlichen um die Strahlung einer atomaren Spektrallinie mit einer Wellenlänge von ca. 254 nm.

Um dem wachsenden Umweltbewußtsein Rechnung zu tragen, werden in jüngster Zeit zunehmend quecksilberfreie UV- und VUV-Strahlungsquellen entwickelt. Bisher konnten allerdings nur relativ geringe UV- bzw. VUV-Ausbeuten (ca. 10 % bis 20 %, bei technisch relevanten Leistungsdichten) erzielt werden im Vergleich zur Quecksilber-Niederdruckentladung (ca. 70 %). Ein Einsatz dieser quecksilberfreien UV- bzw. VUV-Strahler in der Ausgestaltung einer Leuchtstofflampe für die Allgemeinbeleuchtung war deshalb unwirtschaftlich und kam bisher nicht in Betracht. Daher bestand bisher auch nicht die Notwendigkeit nach Leuchtstoffen zu suchen, die sowohl im VUV-Bereich gut anregbar als auch bezüglich ihrer Emissionseigenschaften für Zwecke der Allgemeinbeleuchtung geeignet sind. Mit der in o.g. Patentanmeldung erläuterten Betriebsweise können nun erstmalig auch in quecksilberfreien Entladungen Wirkungsgrade, insbesondere zur Erzeugung von VUV-Strahlung von 65 % und mehr erzielt werden. Die hohen VUV-Ausbeuten werden insbesondere durch die sehr effiziente Erzeugung von $Xe_2^*$ - Excimeren realisiert. Dabei wird der Hauptteil der Strahlungsleistung im Wellenlängenbereich zwischen ca. 145 nm und 185 nm emittiert. Damit ist in Hinblick auf eine effiziente Strahlungserzeugung eine echte Alternative für die konventionelle Quecksilber-Niederdruckentladung gefunden. Für einen Einsatz der neuartigen Strahlungsquelle in der Allgemeinbeleuchtung ist allerdings die Konversion der kurzwelligen VUV-Strahlung in Licht erforderlich, d.h. in den sichtbaren Bereich des optischen Spektrums.

Aufgabe der Erfindung ist es, eine Leuchtstofflampe mit für Zwecke der Allgemeinbeleuchtung geeigneter Leuchtstoffbeschichtung anzugeben, wobei die Leuchtstofflampe auf einem VUV-Strahler basiert, der insbesondere Wellenlängen im Bereich zwischen ca. 145 nm und 185 nm erzeugt. Diese Aufgabe wird durch den Anspruch 1 gelöst. Weitere vorteilhafte Merkmale finden sich in den abhängigen Ansprüchen.

Eine charakterisierende Größe für die Effizienz der Konversion elektromagnetischer Strahlung durch Leuchtstoffe ist deren wellenlängenabhängige Anregbarkeit. Sie ist proportional dem Produkt aus Absorption und Quantenwirkungsgrad. Letzterer ist die Wahrscheinlichkeit für die Erzeugung eines Photons durch den Leuchtstoff, nachdem ein Photon kürzerer Wellenlänge (höherer Energie) absorbiert wurde. Maximale Anregbarkeit liegt demnach vor, wenn sowohl die Absorption als auch der Quantenwirkungsgrad 100 % betragen, d.h. jedes einfallende Photon absorbiert und in ein Photon längerer Wellenlänge (niederer Energie) konvertiert wird.

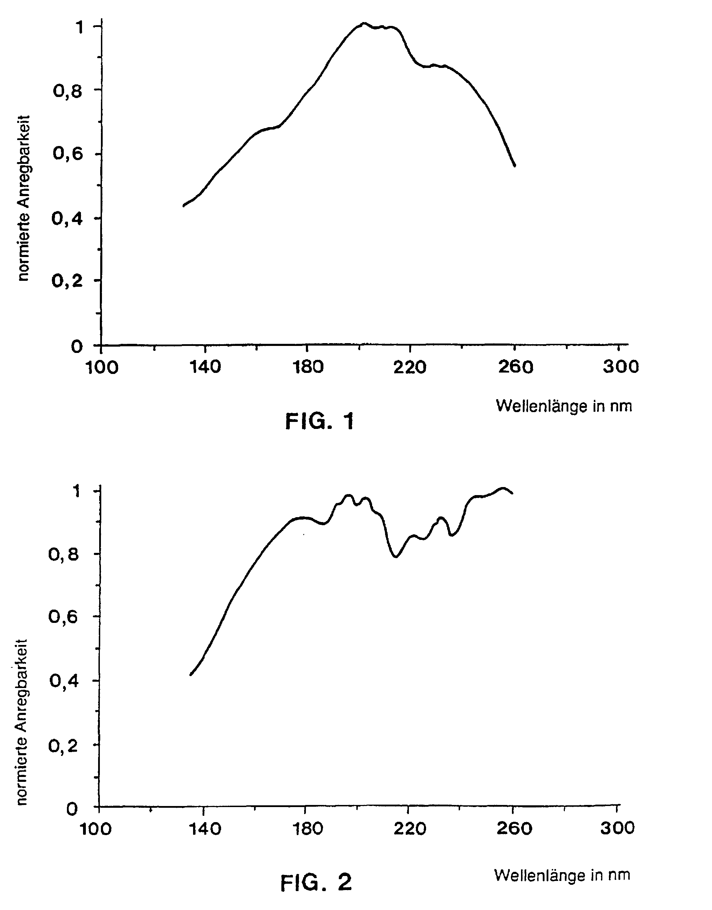

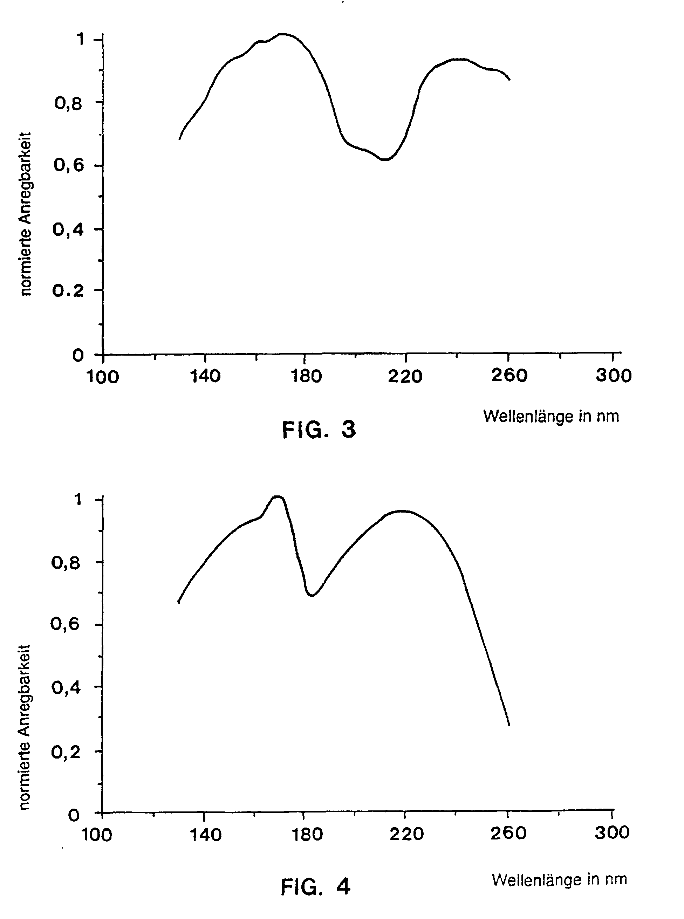

In Voruntersuchungen ist gezielt die Anregbarkeit einer Vielzahl für den Einsatz in herkömmlichen Leuchtstofflampen mit Quecksilber-Niederdruckentladung gebräuchlicher Leuchtstoffe mit VUV-Strahlung meßtechnisch ermittelt worden. Dabei hat es sich gezeigt, daß bei allen Leuchtstoffen mit abnehmender Wellenlänge der einfallenden Strahlung zwar die Absorption im wesentlichen zunimmt, die Anregbarkeit aber bei Unterschreiten einer Grenzwellenlänge überraschenderweise drastisch abnimmt. Dieses Verhalten ist in den Figuren 1-3 exemplarisch gezeigt. Dargestellt ist die normierte Anregbarkeit als Funktion der Wellenlänge je eines Rot-($Y_2O_3{:}Eu^{3+}$), Grün-($GdMgB_5O_{10}{:}Ce,Tb$) und Blauleuchtstoffs ($BaMgAl_{10}O_{17}{:}Eu$). Als Folge weisen einige Leuchtstoffe, die in herkömmlichen Leuchtstofflampen vorteilhaft eingesetzt werden, z.B. der Grünleuchtstoff $CeMgAl_{11}O_{19}{:}Tb^{3+}$, eine unzureichende Anregbarkeit durch VUV-Strahlung auf. In diesem Fall erstreckt sich der Abfall der Anregbarkeit bereits über den gesamten VUV-Bereich. Andere Leuchtstoffe hingegen lassen sich durch VUV-Strahlung besser anregen, da der Abfall erst am kurzwelligen Ende des VUV-Bereichs einsetzt. Ein Beispiel dafür ist der ebenfalls bekannte Blauleuchtstoff $BaMgAl_{10}O_{17}{:}Eu^{2+}$ (s. Figur 3).

Die dem beobachteten Verhalten zugrunde liegenden physikalischen Vorgänge sind noch nicht vollständig geklärt. Gegenwärtig wird angenommen, daß mögliche Ursachen in grundlegend unterschiedlichen Absorptionsmechanismen für Strahlung mit Wellenlängen unterhalb der Grenzwellenlänge begründet sind. Die Strahlungsleistung der für die Leuchtstoffanregung wichtigsten Spektrallinie der herkömmlichen Quecksilber-Niederdruckentladung mit der Wellenlänge 254 nm führt hauptsächlich zu einer Anregung der auch als Leuchtzentren wirkenden Aktivatoratome oder ggf. vorhandener Koaktivatoren (Sensibilisatoren). Die Sensibilisatoren transferieren in diesem Fall die Anregungsenergie auf die Aktivatoratome. Unterhalb der Grenzwellenlänge nimmt die Absorption durch das Wirtsgitter sprunghaft zu (der Absorptionskoeffizient erreicht Werte in der Größenordnung von $10^5$ cm$^{-1}$ und mehr). Die Grenzwellenlänge kann deshalb vereinfachend als die Wellenlänge interpretiert werden, die ein Photon höchstens haben darf um ein Elektron aus dem Valenzband des Wirtsgitters gerade noch in das Leitungsband anregen zu können. Die entsprechende Energiedifferenz zwischen Valenz- und Leitungsband wird im folgenden als optische Bandlücke bezeichnet und die Grenzwellenlänge als optische Bandkante.

Wird ein Elektron des Wirtsgitters vom Valenz- in das Leitungsband angeregt, indem es ein Photon entsprechender Energie absorbiert, entsteht ein "Elektron-Loch-Paar", wobei Elektron und Loch frei oder als Exziton gebunden sein können (Details hierzu finden sich z.B. in: Charles Kittel, "Einführung in die Festkörperphysik", Oldenbourg Verlag, München, 5. Auflage, 1980, S. 359 ff). Ein Exziton ist elektrisch neutral und kann sich deshalb innerhalb des Gitters relativ frei bewegen und seine Energie an einen Stoßpartner abgeben, beispielsweise an ein Aktivatoratom. Dieses kann seinerseits Energie in Form von Licht abstrahlen. Für zunehmende Photonenenergien (abnehmende Wellenlängen der absorbierten Strahlung) wurde experimentell eine deutliche Abnahme der Anregbarkeit ermittelt, sobald die Photonenenergien größer als die optische Bandlücke (d.h. die Wellenlängen der Photonen kleiner als die optische Bandkante) sind. Ohne daß eine Festlegung auf irgendeine theoretische Erklärung beabsichtigt ist, werden gegenwärtig sowohl Oberflächen- als auch Volumenstörstellen für diese Beobachtung verantwortlich gemacht. Die Störstellen "fangen" zunehmend die freien Elektronen und Löcher bzw. die Exzitonen ein, bevor letztere ihre Energie an die Aktivatoratome (d.h. Leuchtzentren) abgeben können. Von den Störstellen - das können Verunreinigungen, Versetzungen o.ä. sein - geht die Energie strahlungslos in verschiedene Verlustkanäle und führt letztlich nur zu einer unerwünschten Erwärmung des Leuchtstoffs.

Interessant im Kontext der Erfindung sind jene Leuchtstoffe für Beleuchtungszwecke, die sich mit VUV-Strahlung effizient anregen lassen. Aufgrund der eingangs geschilderten Erkenntnisse handelt es sich hierbei um Leuchtstoffe, deren optische Bandlücke des Wirtsgitters oberhalb der niederenergetischen Grenze des Energiespektrums der VUV-Strahlung liegt, insbesondere oberhalb 6,7 eV. Geeignete Wirtsgitter sind z.B. Borate, Phosphate, Aluminate sowie Silikate. Das Wirtsgitter ist mit mindestens einer zusätzlichen Substanz dotiert, die als Leuchtzentrum fungiert und üblicherweise als Aktivator bezeichnet wird. Durch geeignete Wahl des Aktivators ist das optische Spektrum der Lumineszenz gezielt beeinflußbar. Dabei dient die Farbe der Lumineszenz zur Bezeichnung des betreffenden Leuchtstoffs. Die drei Grundfarben Rot, Grün und Blau sind für die Beleuchtungstechnik von herausragendem Interesse, weil sich mit ihnen prinzipiell jede beliebige Mischfarbe, z.B. für die Effekt- oder Signalbeleuchtung sowie weißes Licht - besonders wichtig für die Allgemeinbeleuchtung - erzeugen läßt. Dazu werden die verschiedenen Leuchtstoffkomponenten geeignet kombiniert, beispielsweise gemischt oder in alternierender Folge angeordnet. Geeignete Aktivatoren sind z.B. Eu$^{3+}$ für Rotleuchtstoffe, Tb$^{3+}$ für Grünleuchtstoffe und Eu$^{2+}$ für Blauleuchtstoffe. Insbesondere können damit gezielt solche Leuchtstoffe aktiviert werden, deren Emissionsspektren besonders gut für einen Dreibandenleuchtstoff geeignet sind. Zur Optimierung sowohl der Lichtausbeute als auch der Farbwiedergabe einer Dreibandenlampe für die Allgemeinbeleuchtung muß die Hauptemission des Rotleuchtstoffes bei ca. 610 nm, des Grünleuchtstoffes bei ca. 540 nm und des Blauleuchtstoffes bei ca. 450 nm liegen (s. z.B. A.W. Thornton, J. Opt. Soc. Am. 61(1971)1155).

Je nach Lage ihrer optischen Bandkante innerhalb des hier interessierenden VUV-Bereichs lassen sich effizient anregbare VUV-Leuchtstoffe grob in zwei Klassen einteilen. Bei der ersten Klasse wird mehr als 50 % der einfallenden VUV-Strahlungsleistung vom Wirtsgitter absorbiert und von dort zu den Leuchtzentren transferiert. Der restliche Anteil der VUV-Strahlungsleistung kann z.B. von den Aktivatoratomen direkt absorbiert werden. Ein Beispiel hierfür ist der Rotleuchtstoff $(Y_xGd_yEu_z)BO_3$. Es handelt sich um ein mit dreiwertigem Europium Eu$^{3+}$ aktiviertes Mischborat. Geeignete Werte für $x, y$ und $z$ sind $0 \leq x \leq 0,99$, $0 \leq y \leq 0,99$, $0,01 \leq z \leq 0,2$, bevorzugt $0,55 \leq x \leq 0,87$, $0,1 \leq y \leq 0,3$ und $0,03 \leq z \leq 0,15$, wobei jeweils die Randbedingung $x + y + z \approx 1$ erfüllt ist. Ein Beispiel für einen Blauleuchtstoff ist das mit zweiwertigem Europium Eu$^{2+}$ aktivierte Mischaluminat $(Ba_xEu_y)MgAl_{10}O_{17}$. Geeignete Werte für $x$ und $y$ sind $0,6 \leq x \leq 0,97$, $0,03 \leq y \leq 0,4$, bevorzugt $0,8 \leq x \leq 0,95$, $0,05 \leq y \leq 0,2$, wobei jeweils $x + y \approx 1$ gilt. Beispiele für mit dreiwertigem Terbium Tb$^{3+}$ aktivierte Grünleuchtstoffe sind: 1.) das Mischaluminat $(Y_xGd_yTb_z)_3Al_5O_{12}$, wobei gilt: $0,1 \leq x \leq 0,99$, $0 \leq y \leq 0,9$, $0,03 \leq z \leq 0,4$ und $x + y + z \approx 1$, insbesondere $y = 0$, $0,8 \leq x \leq 0,99$, $0,01 \leq z \leq 0,2$ und $x + z \approx 1$, 2.) das Mischsilikat $(Y_xSc_yTb_z)_2SiO_5$, wobei gilt: $0,6 \leq x \leq 0,99$, $0 \leq y \leq 0,1$, $0,01 \leq z \leq 0,4$ und $x + y + z \approx 1$, sowie 3.) das Mischborat $(Y_xGd_yTb_z)BO_3$, wobei gilt: $0 \leq x \leq 0,99$, $0 \leq y \leq 0,99$, $0,01 \leq z \leq 0,4$, bevorzugt $0,55 \leq x \leq 0,8$, $0,1 \leq y \leq 0,3$, $0,03 \leq z \leq 0,2$ und $x + y + z \approx 1$. Je näher die optische Bandkante zur oberen Grenze des VUV-Wellenlängenbereichs liegt, desto mehr dominiert die Absorption der VUV-Strahlung durch das Wirtsgitter. Im Extremfall liegt ausschließlich Wirtsgitterabsorption vor, d.h. mit und ohne Aktivator ergibt sich die gleiche Absorption.

Bei der zweiten Klasse hingegen wird mehr als 50 % der einfallenden VUV-Strahlungsleistung direkt vom Aktivator (d.h. dem Leuchtzentrum) absorbiert. Der restliche Anteil der VUV-Strahlungsleistung kann z.B. vom Wirtsgitter und ggf. weiteren Dotierungssubstanzen absorbiert werden. Diese Situation liegt vor, wenn die optische Bandkante des Wirtsgitters deutlich kleiner als die obere Grenze des VUV-Wellenlängenbereichs ist. Beispiele für diese Klasse von Leuchtstoffen sind mit dreiwertigem Terbium Tb$^{3+}$ aktivierte Mischphosphate entsprechend der allgemeinen Formel $(Ln_xCe_ySc_wTb_z)PO_4$, wobei Ln eines der Elemente Lanthan La, Yttrium Y oder Gadolinium Gd oder eine Mischung dieser Elemente bezeichnet. Geeignete Werte für $x, y, w$ und $z$ sind $0,35 \leq x \leq 0,95$, $0 \leq y \leq 0,5$, $0 \leq w \leq 0.2$,

$0,05 \leq z \leq 0,5$, bevorzugt $w = 0$, $0,45 \leq x \leq 0,8$, $0,1 \leq y \leq 0,3$, $0,1 \leq z \leq 0,25$, wobei jeweils $w + x + y + z \approx 1$ gilt. In diesen Fällen wird die Anregungsleistung fast ausschließlich durch den Aktivator $Tb^{3+}$ selbst absorbiert. Das bei der Anregung mit Strahlung der Wellenlänge 254 mn als Sensibilisator notwendige $Ce^{3+}$ ist im vorliegenden Fall der VUV-Anregung für die Leuchtstoffe dieser Klasse von untergeordneter Bedeutung und kann möglicherweise weggelassen werden, ohne daß eine Änderung der Lichtausbeute erfolgt. Ob $Ce^{3+}$ in diesem Zusammenhang überhaupt eine (wenn auch nur kleine) Verbesserung bewirkt, ist noch nicht abschließend geklärt.

Bei der erfindungsgemäßen Leuchtstoffbeschichtung handelt es sich um eine Dreibanden-Leuchtstoffbeschichtung zur Erzeugung weißen Lichts. Sie besteht aus den Leuchtstoffen: gemäß Anspruch 1. Diese Leuchtstoffbeschichtung zeichnet sich neben einer guten VUV-Anregbarkeit durch eine gute Farbwiedergabe aus, was insbesondere in der Beleuchtungstechnik von großer Wichtigkeit ist. Darüber hinaus kann es vorteilhaft sein, die Oberfläche der Leuchtstoffe, d.h. der einzelnen Leuchtstoffkörner und/oder der aufgetragenen Leuchtstoffbeschichtung mit einer Schutzschicht zu versehen, die im VUV-Bereich ausreichend transparent ist, z.B. aus $MgF_2$

Die Erfindung wird im folgenden anhand einiger Ausführungsbeispiele näher erläutert. Zunächst sind einige lichttechnische Daten von Leuchtstoffen aufgeführt, die durch Anregung mit $Xe_2^*$-Excimerstrahlung ermittelt wurden. Die Größe $E_{Xe}$ gibt an, wie hoch die Anregbarkeit mit VUV-Strahlung (mit dem Spektrum der $Xe_2^*$-Excimerstrahlung im Wellenlängenbereich zwischen 145 nm und 185 nm gewichtetes Mittel) relativ zur maximalen Anregbarkeit ist, die bei einer bestimmten diskreten Wellenlänge erreicht wird. $E_{Xe}$ ist somit der Wert, auf den sich die Anregbarkeit eines Leuchtstoffes reduziert, wenn er nicht mit Strahlung der Wellenlänge seines Anregungsmaximums sondern mit dem gesamten Kontinuum der Excimerstrahlung im Wellenlängenbereich zwischen 145 nm und 185 nm bestrahlt wird. $Q_{Xe}^*$ bezeichnet den angenäherten Quantenwirkungsgrad (er wird von der Präparation des Leuchtstoffes beeinflußt und wurde nicht optimiert, so daß die angegebenen Werte als untere Grenzen zu verstehen sind). Es zeigen

Fig. 1    das VUV-Anregungsspektrum des Rotleuchtstoffes $Y_2O_3{:}Eu^{3+}$,

Fig. 2    das VUV-Anregungsspektrum des Grünleuchtstoffs $CeMgAl_{11}O_{19}{:}Tb^{3+}$,

Fig. 3    das VUV-Anregungsspektrum des Blauleuchtstoffs $BaMgAl_{10}O_{17}{:}Eu^{2+}$,

Fig. 4    das VUV-Anregungsspektrum des Rotleuchtstoffes $(Y_{0,72}Gd_{0,2}Eu_{0,08})BO_3$,

Fig. 5    das VUV-Anregungsspektrum des Grünleuchtstoffs $(La_{0,43}Ce_{0,39}Tb_{0,18})PO_4$,

Fig. 6a   die Seitenansicht einer neuartigen Leuchtstofflampe mit erfindungsgemäßer Dreibanden-Leuchtstoffbeschichtung,

Fig. 6b   den Querschnitt entlang A-A der in Fig. 6a gezeigten Leuchtstofflampe,

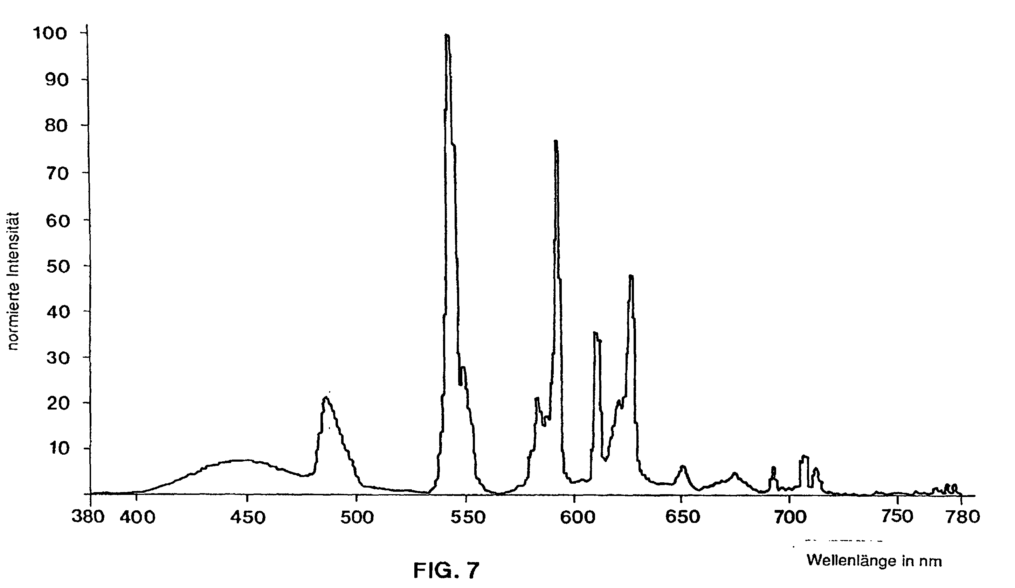

Fig. 7    das Emissionsspektrum der Dreibanden-Leuchtstofflampe aus den Figuren 6a,b.

**Beispiel 1**

Das erste Ausführungsbeispiel beschreibt Rotleuchtstoffe mit gut geeigneten Emissionsspektren. Es handelt sich jeweils um mit dreiwertigem Europium aktivierte Seltenerd-Mischborate. Die folgende Tabelle zeigt Leuchtstoffe mit verschiedenen Zusammensetzungen, wobei die erste Zusammensetzung sowohl Yttrium Y als auch Gadolinium Gd, die beiden folgenden nur Yttrium bzw. nur Gadolinium enthalten. In Figur 4 ist das Anregungsspektrums des Leuchtstoffs Nr.1 gezeigt.

| Nr. | Zusammensetzung | $E_{Xe}$ | $Q_{Xe}^*$ |
|-----|-----------------|----------|------------|
| 1 | $(Y_{0,72}Gd_{0,2}Eu_{0,08})BO_3$ | 0,89 | 0,69 |
| 2 | $(Y_{0,92}Eu_{0,08})BO_3$ | 0,86 | 0,57 |
| 3 | $(Gd_{0,92}Eu_{0,08})BO_3$ | 0,84 | 0,57 |

**Beispiel 2**

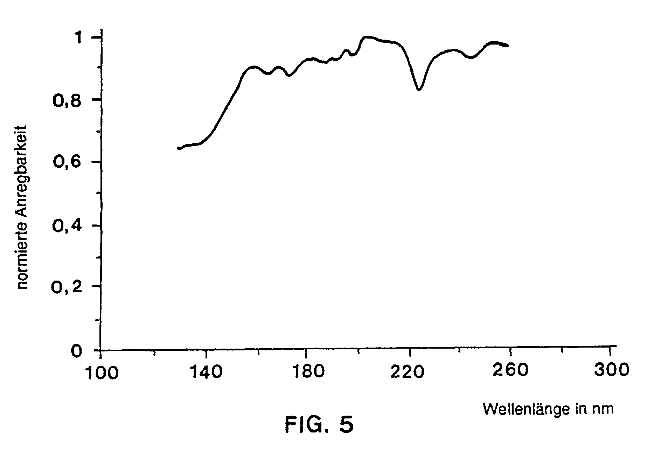

Das zweite Ausführungsbeispiel beschreibt Grünleuchtstoffe mit sehr gut geeigneten Emissionsspektren. Es handelt sich um mit dreiwertigem Terbium aktivierte Seltenerd-Mischphosphate. Die folgende Tabelle zeigt Leuchtstoffe mit verschiedenen Zusammensetzungen, die teilweise zusätzlich mit dreiwertigem Cer oder Scandium als Koaktivator dotiert sind. Die ersten vier Leuchtstoffe enthalten Lanthan La. Bei den folgenden vier Leuchtstoffen ist das Lanthan durch Yttrium Y ersetzt, wobei Leuchtstoff Nr.8 noch Scandium Sc zugesetzt ist. Bei den letzten drei Leuchtstoffen ist das Lanthan durch Gadolinium Gd ersetzt, wobei dem letzten Leuchtstoff wiederum zusätzlich Scandium Sc zugesetzt ist. Figur 5 zeigt das Anregungsspektrums des Leuchtstoffs $(La_{0,44}Ce_{0,43}Tb_{0,13})PO_4$.

| Nr. | Zusammensetzung | $E_{Xe}$ | $Q^*_{Xe}$ |
|---|---|---|---|
| 1 | $(La_{0,43}Ce_{0,39}Tb_{0,18})PO_4$ | 0,89 | 0,80 |
| 2 | $(La_{0,57}Ce_{0,29}Tb_{0,14})PO_4$ | 0,88 | 0,78 |
| 3 | $(La_{0,65}Ce_{0,20}Tb_{0,15})PO_4$ | 0,87 | 0,76 |
| 4 | $(La_{0,828}Tb_{0,172})PO_4$ | 0,86 | 0,74 |
| 5 | $(Y_{0,434}Ce_{0,394}Tb_{0,172})PO_4$ | 0,89 | 0,75 |
| 6 | $(Y_{0,65}Ce_{0,2}Tb_{0,15})PO_4$ | 0,91 | 0,72 |
| 7 | $(Y_{0,828}Tb_{0,172})PO_4$ | 0,82 | 0,65 |
| 8 | $(Y_{0,818}Sc_{0,01}Tb_{0,172})PO_4$ | 0,89 | 0,73 |
| 9 | $(Gd_{0,434}Ce_{0,394}Tb_{0,172})PO_4$ | 0,89 | 0,82 |
| 10 | $(Gd_{0,828}Tb_{0,172})PO_4$ | 0,84 | 0,71 |
| 11 | $(Gd_{0,821}Sc_{0,0067}Tb_{0,172})PO_4$ | 0,89 | 0,8 |

**Beispiel 3**

Das dritte Ausführungsbeispiel beschreibt ebenfalls Grünleuchtstoffe mit sehr gut geeigneten Emissionsspektren. Wie folgende Tabelle zeigt, handelt es sich um zwei mit dreiwertigem Terbium aktivierte Yttriumborate, wobei Nr. 2 zusätzlich Gadolinium enthält.

| Nr. | Zusammensetzung | $E_{Xe}$ | $Q^*_{Xe}$ |
|---|---|---|---|
| 1 | $(Y_{0,9}Tb_{0,1})BO_3$ | 0,84 | 0,62 |
| 2 | $(Y_{0,7}Gd_{0,2}Tb_{0,1})BO_3$ | 0,86 | 0,65 |

**Beispiel 4**

Das vierte Ausführungsbeispiel beschreibt einen Blauleuchtstoff. Es handelt sich um ein mit zweiwertigem Europium aktiviertes Mischaluminat gemäß der Zusammensetzung $(Ba_{0,94}Eu_{0,06})MgAl_{10}O_{17}$. Folgende Werte wurden ermittelt: $E_{Xe}$ = 0,96, $Q^*_{Xe}$ = 0,86.

**Beispiel 5**

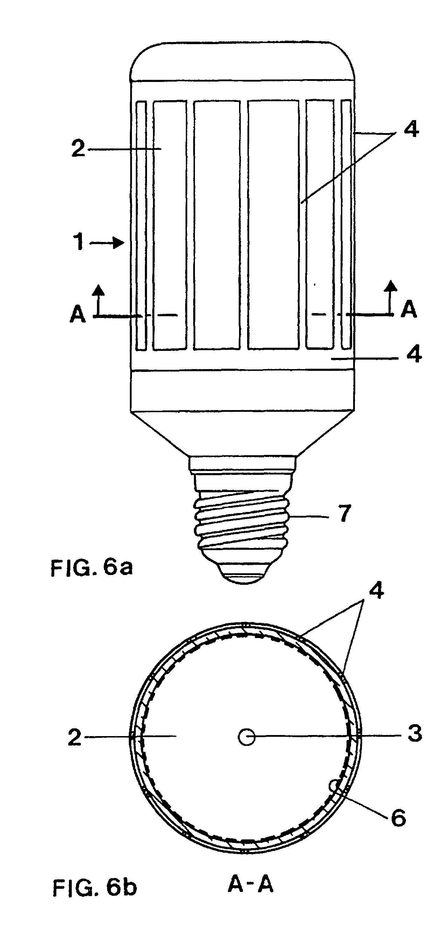

In Fig. 6a ist die Seitenansicht und in Fig. 6b der Querschnitt einer Leuchtstofflampe 1 gezeigt, die insbesondere für Beleuchtungszwecke geeignet ist. Das kreiszylinderförmige Entladungsgefäß 2 besteht aus 0,7 mm dickem DURAN®-Glas (Fa. Schott), weist einen Durchmesser von ca. 50 mm auf und ist mit Xenon bei einem Druck von 173 hPa gefüllt. Zentrisch axial innerhalb des Entladungsgefäßes 2 ist eine aus einem Edelstahlstab mit kreisförmigem Querschnitt und einem Durchmesser von 2 mm bestehende Innenelektrode 3 angeordnet. Auf der Außenwand des Entladungsgefäßes 2 sind achsparallel und gleichmäßig verteilt zwölf 1 mm breite und 8 cm lange Leitsilberstreifen als Außenelektroden 4 angeordnet. Die Innenwand des Entladungsgefäßes 2 ist mit einer Leuchtstoffschicht 6 beschichtet. Es handelt sich dabei um eine Dreibanden-Leuchtstoffmischung mit der Blaukomponente B: $(Ba_{0,94}Eu_{0,06})$ $MgAl_{10}O_{17}$, der Grünkomponente G: $(La_{0,43}Ce_{0,39}Tb_{0,18})PO_4$ und der Rotkomponente R: $(Y_{0,72}Gd_{0,2}Eu_{0,08})BO_3$. Die Komponenten sind im Verhältnis B:G:R=0,085:0,555:0,36 gemischt. An die Innenelektrode 3 wird mittels Edison-Sokkel 7 eine pulsförmige periodische Spannung angelegt, die bezüglich der Außenelektrode ca. 4 kV beträgt, bei einer mittleren Pulsdauer von ca. 1,2 µs und einer Pulsfrequenz von ca. 25 kHz. Damit wird eine Lichtausbeute von 40 1m/ W erzielt. Die Farbtemperatur beträgt 4000 K und der Farbort gemäß der Farbnormtafel nach CIE hat die Koordinaten $x$ = 0,38 und $y$ = 0,377. Das Emissionsspektrum dieser Lampe ist in Figur 6 dargestellt.

**Patentansprüche**

1. Leuchtstofflampe mit einer Leuchtstoffbeschichtung auf der Innenwandfläche des Lampenkolbens, wobei innerhalb des Lampenkolbens VUV-Strahlung, insbesondere mit Wellenlängen im Bereich zwischen ca. 145 nm und 185 nm erzeugt wird und wobei die Leuchtstoffbeschichtung folgende Leuchtstoffe umfasst:

   als Rotleuchtstoff R ein Mischborat entsprechend der allgemeinen Formel

   $$(Y_x Gd_y Eu_z)BO_3,$$

   wobei gilt: $0 \leq x \leq 0,99$, $0 \leq x \leq 0,99$, $0,01 \leq z \leq 0,2$ und $x+y+z \approx 1$, als Grünleuchtstoff G ein Mischphosphat entsprechend der allgemeinen Formel

   $$(Ln_x Ce_y Sc_w Tb_z)PO_4,$$

   wobei Ln eines der Elemente La, Y oder Gd oder eine Mischung dieser Elemente bezeichnet und wobei gilt: $0,35 \leq x \leq 0,95$, $0 \leq y \leq 0,5$, $0 \leq w \leq 0,2$, $0,05 \leq z \leq 0,5$ und $w+x+y+z \approx 1$,
   als Blauleuchtstoff B ein Mischaluminat entsprechend der allgemeinen Formel

   $$(Ba_x Eu_y)MgAl_{10}O_{17},$$

   wobei gilt: $0,6 \leq x \leq 0,97$, $0,03 \leq y \leq 0,4$ und $x+y \approx 1$,
   und wobei für die Gewichtsanteile der Mischung gilt: $0,2 < R < 0,5$, $0,4 < G < 0,7$, $0,05 < B < 0,15$ und $R+G+B = 1$.

2. Leuchtstofflampe nach Anspruch 1, **dadurch gekennzeichnet, dass** die Oberfläche der Leuchtstoffe und/oder der Leuchtstoffbeschichtung mit einer Schutzschicht versehen ist.

3. Leuchtstofflampe nach Anspruch 2, **dadurch gekennzeichnet, dass** die Schutzschicht aus $MgF_2$ besteht.

**Claims**

1. Fluorescent lamp having a fluorescent substance coating on the inner wall surface of the lamp bulb, VUV radiation, in particular with wave lengths in the range between approximately 145 nm and 185 nm, being generated inside the lamp bulb, and the fluorescent substance coating comprising the following fluorescent substances; as red fluorescent substance R, a mixed borate corresponding to general formula

   $$(Y_x Gd_y Eu_z) BO_3,$$

   wherein it holds that: $0 \leq x \leq 0.99$, $0 \leq x \leq 0.99$, $0.01 \leq z \leq 0.2$ and $x + y + z \approx 1$
   as green fluorescent substance G, a mixed phosphate corresponding to the general formula

   $$(Ln_x Ce_y Sc_w Tb_z) PO_4,$$

   wherein Ln notes one of the elements La, Y or Gd, or a mixture of these elements, and it holds that:
   $0.35 \leq x \leq 0.95$, $0 \leq y \leq 0.5$, $0 \leq w \leq 0.2$, $0.05 \leq z \leq 0.5$ and $w + x + y + z \approx 1$,
   as blue luminescence substance B, a mixed aluminate corresponding to the general formula

   $$(Ba_x Eu_y)MgAl_{10}O_{17},$$

   wherein it holds that: $0.6 \leq x \leq 0.97$, $0.03 \leq y \leq 0.4$ and $x + y \approx 1$,
   and wherein the following are applicable for the proportions of a mixture by weight: $0.2 < R < 0.5$, $0.4 < G < 0.7$,

0.05 < B < 0.15 and R + G + B = 1.

2. Fluorescent lamp according to Claim 1, **characterized in that** the surface of the fluorescent substances and/or of the fluorescent substance coating is provided with a protective layer.

3. Fluorescent lamp according to Claim 2, **characterized in that** the protective layer comprises $MgF_2$.

**Revendications**

1. Lampe fluorescente ayant un revêtement de substances fluorescentes sur la surface de paroi intérieure de l'ampoule de la lampe, un rayonnement dans l'ultraviolet lointain ayant notamment des longueurs d'onde comprises entre environ 145 nm et 185 nm, étant produit à l'intérieur de l'ampoule de la lampe, et le revêtement de substances fluorescentes comprenant les substances fluorescentes suivantes :

comme substance fluorescente rouge R, un borate mixte correspondant de la formule générale

$$(Y_xGd_yEu_z)BO_3,$$

dans laquelle $0 \leq x \leq 0,99$, $0 \leq x \leq 0,99$, $0,01 \leq z \leq 0,2$ et $x+y+z \approx 1$,
comme substance fluorescente verte G, un phosphate mixte correspondant à la formule générale

$$(Ln_xCe_ySc_wTb_z)PO_4,$$

dans laquelle Ln est l'un des éléments La, Y ou Gd ou un mélange de ces éléments et dans laquelle on a $0,35 \leq x \leq 0,95$, $0 \leq y \leq 0,5$, $0 \leq w \leq 0,2$, $0.05 \leq z \leq 0,5$ et $w + x + y + z \approx 1$,
comme substance fluorescente bleue B, un aluminate mixte correspondant à la formule générale

$$(Ba_xEu_y)MgAl_{10}O_{17},$$

dans laquelle on a $0,6 \leq x \leq 0,97$, $0,03 \leq y \leq 0,4$ et $x + y \approx 1$, et pour les proportions en poids du mélange, on a $0,2 < R < 0,5$, $0,4 < G < 0,7$, $0,05 < B < 0,15$ et R + G + B = 1.

2. Lampe fluorescente suivant la revendication 1, **caractérisée en ce que** la surface des substances fluorescentes et/ou du revêtement de substances fluorescentes est munie d'une couche de protection.

3. Lampe fluorescente suivant la revendication 2, **caractérisée en ce que** la couche est en $MgF_2$.

FIG. 1

FIG. 2

FIG. 3

Wellenlänge in nm

FIG. 4

Wellenlänge in nm

FIG. 5

FIG. 6a

FIG. 6b    A-A

FIG. 7